# EUROPEAN PATENT SPECIFICATION

(11) **EP 3 945 726 B1**
(45) Date of publication and mention of the grant of the patent: **31.08.2022**
(21) Application number: 20188150.5
(22) Date of filing: 28.07.2020
(51) Int. Cl.: H04Q 11/00

(54) **METHOD AND DEVICES FOR CONFIGURING AN OPTICAL NETWORK TERMINAL**
VERFAHREN UND VORRICHTUNGEN ZUR KONFIGURATION EINES OPTISCHEN NETZWERKENDGERÄTES
PROCÉDÉ ET DISPOSITIFS PERMETTANT DE CONFIGURER UN TERMINAL DE RÉSEAU OPTIQUE

(43) Date of publication of application: 02.02.2022
(73) Proprietor: Deutsche Telekom AG, 53113 Bonn (DE)
(72) Inventor: HEIDEMANN, Cornelius, 64372 Ober-Ramstadt (DE); HAAG, Thomas, 63110 Rodgau (DE); HÖPKEN, Lothar, 64285 Darmstadt (DE)
(74) Representative: Blumbach · Zinngrebe Patentanwälte PartG mbB

(56) References cited:
- EP-A1- 3 668 106
- WO-A1-2017/064029
- US-A1- 2012 294 613

## Description

The invention generally relates to fiber-optical distribution networks employing FTTH (fiber-to-the-home), wherein the fiber extends from the central office to the subscriber's living or working space, and in particular, to a method and devices for configuring an optical network terminal (ONT) located at the subscriber's premises.

A passive optical network (PON) is a fiber-optic telecommunications technology for delivering broadband network access to end-customers. Its architecture implements a point-to-multipoint topology, in which multiple endpoints are served by using passive fiber optic splitters to divide the fiber bandwidth among multiple access points. A passive optical network consists of an optical line terminal (OLT), also referred to as optical line termination, located at the provider's central office (CO) and a number of optical network units (ONUs) or optical network terminals (ONTs). ONT and ONU basically refers to the same device, wherein an ONT is located at the customer's home, whereas an ONU is located outside the home. Broadband network architecture using optical fiber to provide all or part of the local loop is generically referred to as FTTX (fiber to the x), wherein there is a differentiation between several distinct FTTX configurations with respect to fiber deployment, exemplary comprising FTTH (fiber-to-the-home), FTTB (fiber-to-the-building), FTTC (fiber-to-the-curb) or FTTN (fiber-to-the-node). Accordingly, in the context of FTTH an ONT is employed, which is located at the customer's home. In the other configurations an ONU is used, wherein the ONU converts optical signals transmitted via fiber to electrical signals and then sends these electrical signals to individual subscribers over a distance via an additional access network.

The OLT performs conversion between the electrical signals used by the service provider's equipment and the fiber optic signals used by the passive optical network and coordinates the multiplexing between the ONUs and OLTs. By the use of passive optical splitters an OLT can typically serve up to 128 ONTs. Upstream signals are combined using a multiple access protocol, usually time division multiple access (TDMA).

FTTH thus designates a technology that provides for an optical fiber to extend from the central office via a transport network directly into the subscriber's living or working space, i.e. to the customer connection. On the side of the central office an active element in the form of the OLT is employed, which sends and receives signals via the optical fibers. On the side of the customer connection the ONT is employed, which also sends and receives signals. The general characteristics of a Gigabit-capable passive optical network (GPON) which comprises OLTs and ONTs is for instance described in the Recommendation ITU-T G.984.1 (03/2008) with Amendment 1 (10/2009) and Amendment 2 (04/2012).

In a passive optical network (PON) optical fibers may be built as 1:1 connections or as 1:n connections. Hence, PON systems are made up of optical fibers, which are distributed by passive optical splitters, so that always several ONTs are connected to one OLT in a tree-like structure. Due to reasons of assignment to meet legal and technical requirements, there is a need for a unique identification of the ONT-OLT relation.

In existing systems the OLT locally learns the 1:1 assignment to the respective ONTs. This assignment identification, however, needs to be conveyed configuratively to the ONT. The identification may be the serial number, the registration identifier or both, wherein the registration identifier, or Registration ID for short, may also be referred to as a password of the passive optical network (PON PW). For implementing the connection, already at the time of implementation the assignment of several keys, such as Registration ID and Line ID, is required, wherein said keys correctly assign ONT and OLT for the later data transmission. Today, the registration process is performed manually.

The Line ID is an identification, which uniquely identifies a respective end-customer connection. It is assigned by the access network provider of the respective end-customer connection and disclosed to the service provider. The Line ID is a logical user-related connection identification.

Line ID and Registration ID are generated in a separate system and are associated with a customer connection. The Registration ID and Line ID are stored in the OLT, and in the course of the implementation the customer or the service technician is provided with the Registration ID for use at the customer's location. By manually configuring the ONT with the Registration ID a next step during the implementation process is enabled, in which the ONT communicates the Registration ID to the OLT, so that thereby a secure association between the customer's home location and his connection on the side of the central office is enabled, i.e. correct Line ID to correct ONT. Behind the ONT a router is arranged, which establishes an IP-based connection and enables access to the Intranet and to the Internet.

While on the one hand a router can utilize an FTTH connection, on the other hand there are also routers known, which, parallel to FTTH, establish a connection into a cellular radio network, for instance based on one of the standards GSM (Global System for Mobile Communications), UMTS (Universal Mobile Telecommunications System) or LTE (Long Term Evolution). These routers provide both access technologies in the same device. For customer identification a subscriber identity module (SIM) is inserted, wherein the customer is provided with the SIM for use in the router.

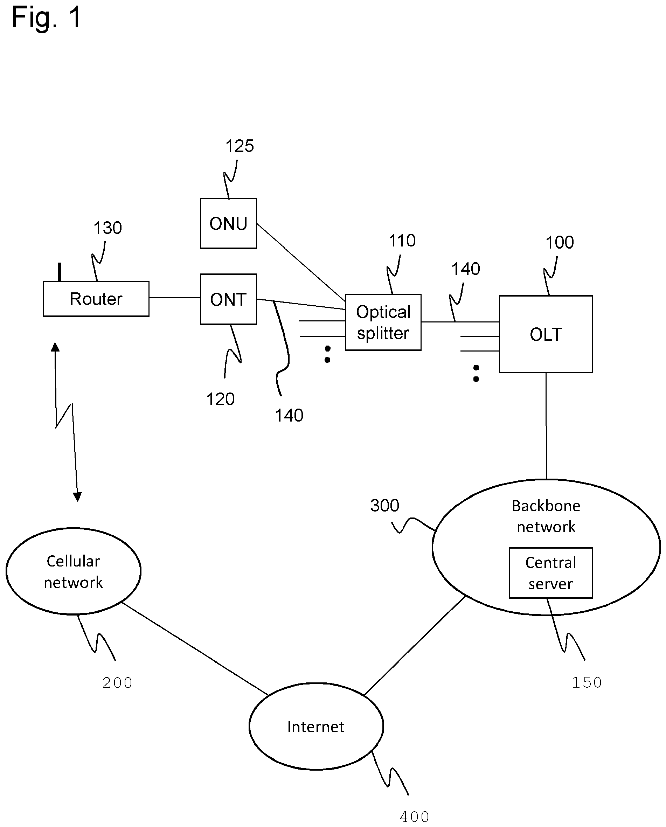

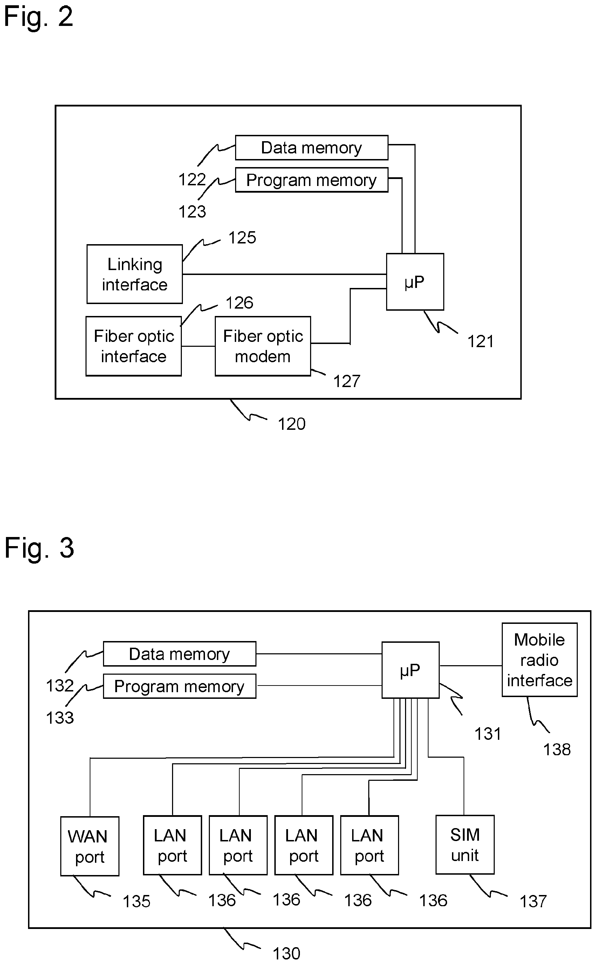

Since in the cellular radio network the radio connection is provided instantly, customers are provided with routers for use with FTTH, which directly after purchase allow to establish a connection to the Internet/Intranet via GSM, UMTS or LTE, thereby providing direct usability, until the FTTH technology is ready for operation. As a further advantage the two access technologies can be combined in order to achieve a higher data transmission rate. Document EP 3 668 106 A1 discloses methods for service provisioning to an optical network terminal, ONT (e.g. Figures 1A, 2A and 3A). The system allows different type of actors to collaborate for service provisioning for a customer (e.g. end user), including activation of layer 2 services for optical network terminal (also designated hereafter as ONT) connected to an optical network (ON). The actors may include : a wholesaler (e.g. a layer 2 service provider or optical network operator for layer 2 services); a retailer (e.g. a layer 3 service provider or optical network operator for layer 3 - and above - services); a supplier (e.g. device supplier, at least ONT supplier). Document US 2012/294613 A1 provides (e.g. Fig. 2A and 2B) a system for registering an optical network unit (ONU) installed in a passive optical network (PON), including a mobile terminal, a registration server, and an optical line terminal (OLT). The mobile terminal is configured to collect an ONU identification from the ONU (e.g. bar code reader or RFID reader), collect a subscriber identification, and transmit the ONU identification and the subscriber identification to a registration server via a communication system.

It is an object of the invention to show a way to improve and/or simplify the implementation and/or configuration of a FTTH-based fiber optic communication connection. In particular, it is an object of the invention to provide a method and devices, which can be utilized for this purpose.

The inventive solution is provided by the features of the independent claims. Accordingly, the object of the invention is achieved by a method according to claim 1, by a router according to claim 9 and an optical network terminal according to claim 12. Preferred and/or advantageous embodiments are provided in the dependent claims.

Generally, any aspect or advantage described in the following with respect to the subject matter of an independent claim also relates to the subject matter of any other independent claim. In particular, any aspect or advantage described in the following in the context of a method generally also applies in the context of a device or system and vice versa.

A core aspect of the present invention may be seen in utilizing a secondary path, in particular using a cellular network, for instance based on GSM, UMTS or LTE, thereby enabling to provide a continuous secure data connection between the central office and the ONT and to exchange keys, in particular a registration ID associated with the ONT. By means of the secure data connection, the invention further enables to automatically carry out the correct logical assignment of ONT and OLT, in that the correct key is configured on the ONT, wherein a customer connection can be unambiguously assigned through the knowledge of SIM, connection and ONT. A further core aspect of the invention may be seen in that the software in the ONT and the router may be controlled in such a way that the devices can exchange data via a local IP connection in a learning operation mode and can resume their original function after termination of the learning operation mode.

### Brief Description of the Figures

It is shown in
Fig. 1 a schematic view of an exemplary and simplified communication system, adapted to perform the inventive method,
Fig. 2 a schematic view of an exemplary embodiment of an inventive optical network terminal,
Fig. 3 a schematic view of an exemplary embodiment of an inventive router, and
Fig. 4 a schematic flowchart of the steps of an exemplary embodiment of an inventive method.

Fig. 1 shows an exemplary and simplified fiber optic communication system, comprising an OLT 100, which is located in the central office of an access network provider, several optical splitters 110 and a plurality of optical network terminals 120 and optical network units 125. The OLT 100 shown in Fig. 1 is designed for controlling more than one PON and thus is provided with several interfaces for connecting optical fibers 140. Although only one optical splitter 110 is shown for simplicity, each PON typically comprises several optical splitters arranged in a tree-like fashion for connecting a plurality of ONTs and ONUs with the OLT 100. The shown ONT 120 and the shown ONU 125 accordingly are only exemplary.

The invention provide a method for configuring an optical network terminal located at a customer's home, such as the ONT 120 shown in Fig. 1. For configuring the ONT 120 a router 130 is employed, which is connected to the ONT 120. In current FTTH installations it is common that the router 130 and the ONT 120 are provided as separate devices. It would, however, also be conceivable to integrate the ONT 120 and the router 130 shown in Fig. 1 into a common device.

The router 130 is utilized to provide access credentials to the ONT 120. For this purpose a communication between the router 130 and the ONT 120 needs to be established. Current connection techniques, however, do not allow to carry out such a configuration of the ONT 120. Therefore, the invention proposes a communication interface for establishing a local communication connection between the router 130 and the ONT 120.

The router 130 uses a secondary communication path to obtain the access credentials to be provided to the ONT 120. For this purpose the router 130 comprises a further communication interface which enables the router 130 to communicate via a mobile radio network, in particular a cellular network 200. Using this communication path the router 130 establishes a communication connection to a central server 150. In the embodiment shown in Fig 1 the central server 150 is located in the backbone network 300 of the access network provider. However, the central server 150 could also be arranged at any other suitable location, as long as it is connectable by the router 130 via the cellular network 200. The connection between router 130 and central server 150 may be established via the cellular network 200 and the Internet 400, however, a direct access between the cellular network 200 and the backbone network 300 is also conceivable. The central server 150 is part of the network management and is adapted to generate and manage the keys used in the fiber optic access network.

In Fig. 2 a schematic view of an exemplary embodiment of the ONT 120 of Fig. 1 is shown. In the shown embodiment the ONT 120 comprises a controlling unit with a microprocessor 121, a first memory 122 for storing data and a second memory 123 for storing programs, such as an operating system and software applications. The operating system may be provided as a firmware. The data memory 122 is used for storing access credentials for performing a registration process with the OLT 100. For connecting the ONT 120 with the OLT 100 a fiber optic interface 126 is provided and a fiber optic modem 127 for converting the optical signals into electrical signals. For connecting the ONT 120 to the router 130 a linking interface 125 is provided, which in particular is provided as an Ethernet interface.

In Fig. 3 a schematic view of an exemplary embodiment of the router 130 of Fig. 1 is shown. In the shown embodiment the router 130 comprises a controlling unit with a microprocessor 131, a first memory 132 for storing data and a second memory 133 for storing programs, such as an operating system and software applications. The operating system may be provided as a firmware. In the shown embodiment the router 130 is provided with a WAN port 135 for upstream connection to the Internet or to an Intranet, several LAN ports 136 for connecting to devices of a local LAN, in particular for connecting to devices of a home network. For connecting to the cellular network 200 the router 130 is provided with a mobile radio interface 138. In order to enable communication via the cellular network 200 using the mobile radio interface 138 a SIM unit 137 is provided, into which a SIM can be inserted.

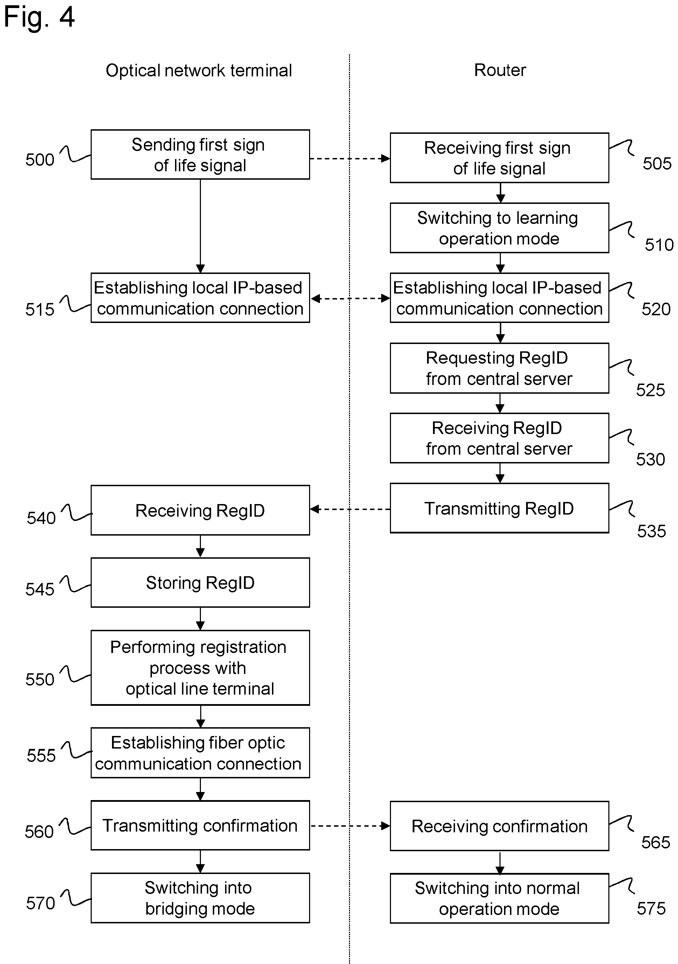

The design of the ONT 120 and the router 130 as shown in Figures 3 and 4, respectively, is depicted in a simplified and schematic manner. Both devices typically comprise further components, which are not shown in the Figures. The router 130 may, for instance, further comprise dedicated interfaces for connecting telephone equipment.

In Fig. 4 a schematic flowchart of the steps of an exemplary embodiment of an inventive method is given.

The router 130 detects that an ONT 120 has been connected. The detection is for instance achieved in that the ONT 120 is connected to the WAN port 135 of the router 130 via an Ethernet cable and starts to send "First sign of life" (FSOL) signals in step 500.

The router 130 detects the FSOL signal in step 505 and starts the learning mode with the ONT 120 in step 510. The ONT 120 also detects the plugged cable and the exchange of information, such as for example MAC addresses for identifying its counterpart. Thereby, it is enabled to exchange data between ONT 120 and router 130 in the learning operation mode, for example in that the ONT 120 assigns an IP address using the dynamic host configuration protocol (DHCP) and on that basis establishes an IP connection. The steps of establishing the local IP-based communication connection between the router 130 and the ONT 120 is depicted as steps 515 and 520.

After the router 130 now has established an IP connection to the ONT 120, the router 130 in step 525 requests the registration ID via the secondary path from the central server. For identification purposes and and in order for the central server 150 to selecte the correct registration ID, the request, which the router 130 transmits to the central server 150, may comprise identification information, which identifies the router 130 and/or the ONT 120. In particular, the request may comprise an information stored on the SIM, which is installed in the SIM unit 137.

Having received the registration ID via the secondary path in step 530, the router 130 in step 535 transmits data via the IP connection to the ONT 120, said data comprising the registration ID. This can be performed via the IP connection using a http protocol or a comparable protocol. The ONT 120 in step 540 receives the registration ID via this http connection and stores it in step 545 and then initiates the standardized OLT-ONT registation process in step 550.

After completion of the learning phase, the ONT 120 connects to the OLT 100 according to the Recommendation ITU-T G.984.4 (02/2008) and thus establishes a fiber optic communciation connection in step 555.

After completion of the learning phase, the ONT 120 transmits in step 560 via the IP connection an information to the router 130, said information indicating that the learning mode is to be terminated. After that the ONT 120 switches into bridging mode in step 570. The router 130, after having received, in step 565, the information indicating that the learning mode is to be terminated, in step 575 switches in its normal operation mode and then connects via the newly-created connection via the central office to the Intranet/Internet.

For performing the above described steps, accordingly adapated software applications are provided in the router 130 and the ONT 120, respectively. The software applications resepectively comprise instructions, which are adapted, when executed by the respective processor 121 or 131, to perform the steps of the inventive method, in particular the steps as described above.

At least some of the preferred aspects of the invention are again summarized below.

According to one aspect, a method for configuring an optical network terminal 120 is provided, which comprises the steps of:
a) connecting the optical network terminal 120 to a networking device 130,
b) establishing a local IP-based communication connection between the optical network terminal 120 and the networking device 130,
c) transmitting a request to receive a registration identifier, said registration identifier being associated with the optical network terminal 120, from the networking device 130 to a central server 150, wherein the request is transmitted via a non-optical communication network, in particular a wireless communication network 200,
d) transmitting a registration identifier, which is associated with the optical network terminal 120, from the central server 150 to the networking device 130 via the non-optical communication network 200 and transmitting the received registration identifier from the networking device 130 to the connected optical network terminal 120 via the IP-based communication connection, and
e) storing the received registration identifier in the optical network terminal 120.

The networking device 130 uses a secondary communication path to obtain the access credentials to be provided to the ONT 120, wherein this secondary communication path is a non-optical communication path, utilizing a non-optical communication network. Said non-optical communication network in particular is a wireless communication network, in particular a cellular network. However, also any other suitable non-optical communication path may be utilized. Hence, the data transmission via the non-optical communication network may for instance comprise a data transmission via DSL (Digital Subscriber Line), NFC (Near Field Communication) or Wi-Fi, wherein Wi-Fi refers to a communication according to the IEEE-802.11 standard. Also a mobile communication device, such as a smartphone, may be part of the non-optical communication path, wherein said mobile communication device may be provided with an application, which is adapted to automatically transmit or relay access credentials to be provided to the ONT 120, such as the registration ID, to the networking device 130, and which may also be adapted to receive or relay requests to be provided to the central server 150, from the networking device 130.

In a preferred embodiment, the method further comprises the following steps:
f) performing a registration process by the optical network terminal 120 with an optical line terminal 100, which is connected to the optical network terminal 120 via an optical fiber 140, using the registration identifier stored in step e),
g) establishing a fiber optic communication connection between the optical network terminal 120 and optical line terminal 100 via the optical fiber 140,
h) transmitting an information from the optical network terminal 120 to the networking device 130 via the IP-based communication connection, said information confirming that step g) has successfully been performed, and
i) switching into a bridging mode by the optical network terminal 120.

After the optical network terminal 120 is connected to the networking device 130 in step a) the optical network terminal 120 advantageously transmits a first sign of life signal to the networking device 130, in response to which the networking device 130 switches into a learning operation mode, and wherein the networking device 130 switches from the learning operation mode to a normal operation mode in response to receiving the information transmitted in step h).

The networking device 130 preferably is provided as a router, which, in the normal operation mode, is adapted to connect to a central office via the established fiber optic communication connection. For identification purposes, the request transmitted from the networking device 130 to the central server 150 in step c) comprises an information, which identifies the networking device 130 and/or the optical network terminal 120 and/or an information stored on a subscriber identification module, which is installed in the networking device 130. Based on that information the central server is enabled to select the correct registration identifier to be transmitted in step d).

In a preferred embodiment, the wireless communication network 200 is a cellular communication network, in particular a cellular communication network based on one of the standards GSM, UMTS, LTE, or any other suitable, also future standard.

In order to prevent eavesdropping on the transmitted access credentials in form of the registration identifier, the transmissions via the non-optical communication network, in particular via the wireless communication network 200 in steps c) and d) may advantageously be performed as secure data transmissions. For this purpose known cryptographical techniques may be employed.

In a preferred embodiment, step b) comprises exchanging MAC addresses between that the optical network terminal 120 and the networking device 130, and the optical network terminal 120 assigning an IP address to the networking device 130 via DHCP and establishing an IP-based communication connection using said assigned IP address.

It is to be noted that the above described method with particular advantage is performed automatically without manual interaction of a human, with the exception of step a), i.e. connecting the optical network terminal 120 to the networking device 130. In other words, a user only connects the networking device 130, typically a router received from the access network provider, with the ONT 120, thereby initiating an automatic process, which results in an automatically established fiber optic communication connection between the ONT 120 and the OLT 100, usable for accessing the Intranet/Internet.

According to another aspect of the invention a router 130 is provided, comprising a first interface 135 for connecting to an optical network terminal 120, and a second interface 138 for connecting to a non-optical communication network, in particular to a wireless communication network 200, wherein the wireless communication network 200 in particular is a cellular communication network, wherein the router 130 is adapted for a normal operation mode and for a learning operation mode, wherein, in the normal operation mode, the router 130 is adapted to connect to a central office via an optical network terminal 120, which is connected to the first interface 135, if a fiber optic communication connection is established between the optical network terminal 120 and an optical line terminal 100, and wherein the router 130 is adapted to switch into the learning operation mode in response to receiving a first sign of life signal from the optical network terminal 120, after said optical network terminal 120 has been connected to the first interface, and wherein, in the learning operation mode, the router 130 is adapted to perform the following steps:
- establishing a local IP-based communication connection with the connected optical network terminal 120,
- transmitting a request to receive a registration identifier, said registration identifier being associated with the connected optical network terminal 120, to a central server 150 via the second interface, and
- transmitting a registration identifier, which in response has been received from the central server 150 via the second interface, to the connected optical network terminal 120 via the established local IP-based communication connection, and
wherein the router 130 is adapted to switch from the learning operation mode back into the normal operation mode in response to receiving an information from the optical network terminal 120 via the established local IP-based communication connection, said information confirming that a fiber optic communication connection is established between the optical network terminal 120 and an optical line terminal 100.

The router 130 preferably is adapted to transmit, in the learning operation mode, a request to receive a registration identifier to a central server 150, wherein said request comprises an information, which identifies the router 130 and/or the connected optical network terminal 120 and/or an information stored in a subscriber identification module, which is installed in the router 130. Furthermore, the router 130 with advantage is adapted to communicate securely with the central server 150 via the non-optical communication network, in particular via the wireless communication network 200.

According to a further aspect of the invention an optical network terminal 120 is provided, which comprises an optical interface 126 for connecting to an optical line terminal 100 via an optical fiber 140, a linking interface 125 for connecting to a networking device 130, wherein the optical network terminal 120 is adapted to perform the following steps:
- establishing a local IP-based communication connection with a networking device 130, which is connected to the linking interface 125,
- receiving a registration identifier from the connected networking device 130 and storing the received registration identifier in a memory 122 of the optical network terminal 120,

- performing a registration process with an optical line terminal 100, which is connected to the optical network terminal 120 via an optical fiber 140, using the stored registration identifier,
- establishing a fiber optic communication connection with the optical line terminal 100 via the optical fiber 140,
- transmitting a confirmation information to the connected networking device 130 via the IP-based communication connection, said information confirming that the fiber optic communication connection between the optical network terminal 120 and the optical line terminal 100 has been successfully established, and
- switching into a bridging mode after said confirmation information has been transmitted to the connected networking device 130.

Preferably, the optical network terminal 120 is adapted to transmit a first sign of life signal to the connected networking device 130 in response to said networking device 130 being connected to the linking interface of the optical network terminal 120. For communicating with a connected networking device the optical network terminal 120 advantageously is adapted to exchange MAC addresses with a networking device 130 connected to the linking interface 125, to assign via DHCP an IP address to said networking device 130 and to establish a local IP-based communication connection with said networking device 130 using said assigned IP address.

The above described registration identifier or registration ID may comprise any access credentials, which are required for establishing a fiber optic communication connection between the ONT 120 and the OLT 100.

It is to be noted that by the described method for providing a registration identifier to an optical network terminal may also be utilized for providing further configuration parameters to the optical network terminal.

## Claims

1. A method for configuring an optical network terminal (120), comprising the steps of:
a) connecting the optical network terminal (120) to a networking device (130),
b) establishing a local IP-based communication connection between the optical network terminal (120) and the networking device (130),
c) transmitting a request to receive a registration identifier, said registration identifier being associated with the optical network terminal (120), from the networking device (130) to a central server (150), wherein the request is transmitted via a non-optical communication network, in particular a wireless communication network (200),
d) transmitting a registration identifier, which is associated with the optical network terminal (120), from the central server (150) to the networking device (130) via the non-optical communication network (200) and transmitting the received registration identifier from the networking device (130) to the connected optical network terminal (120) via the IP-based communication connection, and
e) storing the received registration identifier in the optical network terminal (120).

2. The method according to claim 1, wherein the method further comprises the following steps:
f) performing a registration process by the optical network terminal (120) with an optical line terminal (100), which is connected to the optical network terminal (120) via an optical fiber (140), using the registration identifier stored in step e),
g) establishing a fiber optic communication connection between the optical network terminal (120) and optical line terminal (100) via the optical fiber (140),
h) transmitting an information from the optical network terminal (120) to the networking device (130) via the IP-based communication connection, said information confirming that step g) has successfully been performed, and
i) switching into a bridging mode by the optical network terminal (120).

3. The method according to claim 2, wherein after the optical network terminal (120) is connected to the networking device (130) in step a) the optical network terminal (120) transmits a first sign of life signal to the networking device (130), in response to which the networking device (130) switches into a learning operation mode, and wherein the networking device (130) switches from the learning operation mode to a normal operation mode in response to receiving the information transmitted in step h).

4. The method according to any one of claims 2 or 3, wherein the networking device (130) is provided as a router, which, in the normal operation mode, is adapted to connect to a central office via the established fiber optic communication connection.

5. The method according to any one of the preceding claims, wherein the request transmitted from the networking device (130) to the central server (150) in step c) comprises an information, which identifies the networking device (130) and/or the optical network terminal (120) and/or an information stored on a subscriber identification module, which is installed in the networking device (130).

6. The method according to any one of the preceding claims, wherein the wireless communication network (200) is a cellular communication network, in particular a cellular communication network based on one of the standards GSM, UMTS or LTE.

7. The method according to any one of the preceding claims, wherein the transmissions via the non-optical communication network (200) in steps c) and d) are performed as secure data transmissions.

8. The method according to any one of the preceding claims, wherein step b) comprises exchanging MAC addresses between that the optical network terminal (120) and the networking device (130), and the optical network terminal (120) assigning an IP address to the networking device (130) via DHCP and establishing an IP-based communication connection using said assigned IP address.

9. A router (130), comprising
- a first interface (135) for connecting to an optical network terminal (120), and
- a second interface (138) for connecting to a non-optical communication network, in particular to a wireless communication network (200), wherein the wireless communication network (200) in particular is a cellular communication network,
wherein the router (130) is adapted for a normal operation mode and for a learning operation mode, wherein, in the normal operation mode, the router (130) is adapted to connect to a central office via an optical network terminal (120), which is connected to the first interface (135), if a fiber optic communication connection is established between the optical network terminal (120) and an optical line terminal (100), and wherein the router (130) is adapted to switch into the learning operation mode in response to receiving a first sign of life signal from the optical network terminal (120), after said optical network terminal (120) has been connected to the first interface (135), and
wherein, in the learning operation mode, the router (130) is adapted to perform the following steps:
- establishing a local IP-based communication connection with the connected optical network terminal (120),
- transmitting a request to receive a registration identifier, said registration identifier being associated with the connected optical network terminal (120), to a central server (150) via the second interface, and
- transmitting a registration identifier, which in response has been received from the central server (150) via the second interface, to the connected optical network terminal (120) via the established local IP-based communication connection, and
wherein the router (130) is adapted to switch from the learning operation mode back into the normal operation mode in response to receiving an information from the optical network terminal (120) via the established local IP-based communication connection, said information confirming that a fiber optic communication connection is established between the optical network terminal (120) and an optical line terminal (100).

10. The router (130) according to claim 9, wherein the router (130) is adapted to transmit, in the learning operation mode, a request to receive a registration identifier to a central server (150), wherein said request comprises an information, which identifies the router (130) and/or the connected optical network terminal (120) and/or an information stored in a subscriber identification module, which is installed in the router (130).

11. The router (130) according to any one of claims 9 or 10, wherein the router (130) is adapted to communicate securely with the central server (150) via the non-optical communication network (200).

12. An optical network terminal (120), comprising
- an optical interface (126) for connecting to an optical line terminal (100) via an optical fiber (140),
- a linking interface (125) for connecting to a networking device (130), wherein
the optical network terminal (120) is adapted to perform the following steps:
- establishing a local IP-based communication connection with a networking device (130), which is connected to the linking interface (125),
- receiving a registration identifier from the connected networking device (130) and storing the received registration identifier in a memory (122) of the optical network terminal (120),
- performing a registration process with an optical line terminal (100), which is connected to the optical network terminal (120) via an optical fiber (140), using the stored registration identifier,
- establishing a fiber optic communication connection with the optical line terminal (100) via the optical fiber (140),
- transmitting a confirmation information to the connected networking device (130) via the IP-based communication connection, said information confirming that the fiber optic communication connection between the optical network terminal (120) and the optical line terminal (100) has been successfully established, and
- switching into a bridging mode after said confirmation information has been transmitted to the connected networking device (130).

13. The optical network terminal (120) according to claim 12, adapted to transmit a first sign of life signal to the connected networking device (130) in response to said networking device (130) being connected to the linking interface (125) of the optical network terminal (120).

14. The optical network terminal (120) according to any one of claims 12 or 13, adapted to exchange MAC addresses with a networking device (130) connected to the linking interface (125), to assign via DHCP an IP address to said networking device (130) and to establish a local IP-based communication connection with said networking device (130) using said assigned IP address.

## Patentansprüche

1. Verfahren zum Konfigurieren eines optischen Netzwerk-Endgeräts (120), mit folgenden Schritten:
a) Verbinden des optischen Netzwerk-Endgeräts (120) mit einem Netzwerkgerät (130),
b) Herstellen einer lokalen IP-basierten Kommunikationsverbindung zwischen dem optischen Netzwerk-Endgerät (120) und dem Netzwerkgerät (130),
c) Senden einer Anforderung zum Empfangen einer Registrierungskennung, wobei die Registrierungskennung dem optischen Netzwerk-Endgerät (120) zugeordnet ist, von dem Netzwerkgerät (130) zu einem zentralen Server (150), wobei die Anforderung über ein nichtoptisches Kommunikationsnetz gesendet wird, insbesondere über ein drahtloses Kommunikationsnetz (200),
d) Senden einer Registrierungskennung, die dem optischen Netzwerk-Endgerät (120) zugeordnet ist, von dem zentralen Server (150) zu dem Netzwerkgerät (130) über das nicht-optische Kommunikationsnetz (200) und Senden der empfangenen Registrierungskennung von dem Netzwerkgerät (130) zu dem verbundenen optischen Netzwerk-Endgerät (120) über die IP-basierte Kommunikationsverbindung, und
e) Speichern der empfangenen Registrierungskennung in dem optischen Netzwerk-Endgerät (120).

2. Verfahren nach Anspruch 1, wobei das Verfahren ferner die folgenden Schritte umfasst:
f) Durchführen eines Registrierungsprozesses durch das optische Netzwerk-Endgerät (120) mit einem optischen Leitungs-Endgerät (100), dass über einen Lichtwellenleiter (140) mit dem optischen Netzwerk-Endgerät (120) verbunden ist, unter Verwendung der in Schritt e) gespeicherten Registrierungskennung,
g) Herstellen einer faseroptischen Kommunikationsverbindung zwischen dem optischen Netzwerk-Endgerät (120) und dem optischen Leitungs-Endgerät (100) über den Lichtwellenleiter (140),
h) Senden einer Information von dem optischen Netzwerk-Endgerät (120) zu dem Netzwerkgerät (130) über die IP-basierte Kommunikationsverbindung, wobei die Information bestätigt, dass Schritt g) erfolgreich durchgeführt wurde, und
i) Umschalten in einen Überbrückungsmodus (Bridging-Modus) durch das optische Netzwerk-Endgerät (120).

3. Verfahren nach Anspruch 2, wobei nach dem Verbinden des optischen Netzwerk-Endgeräts (120) mit dem Netzwerkgerät (130) in Schritt a) das optische Netzwerk-Endgerät (120) ein erstes Lebenszeichensignal an das Netzwerkgerät (130) sendet, wobei das Netzwerkgerät (130) in Reaktion darauf in einen Lernbetriebsmodus umschaltet, und wobei das Netzwerkgerät (130) in Reaktion auf den Empfang der in Schritt h) gesendeten Informationen von dem Lernbetriebsmodus in einen normalen Betriebsmodus umschaltet.

4. Verfahren nach einem der Ansprüche 2 oder 3, wobei das Netzwerkgerät (130) als Router ausgebildet ist, der im normalen Betriebsmodus dafür eingerichtet ist, sich über die hergestellte faseroptische Kommunikationsverbindung mit einer Vermittlungsstelle zu verbinden.

5. Verfahren nach einem der vorhergehenden Ansprüche, wobei die in Schritt c) von dem Netzwerkgerät (130) an den zentralen Server (150) gesendete Anforderung eine Information enthält, die das Netzwerkgerät (130) und/oder das optische Netzwerk-Endgerät (120) identifiziert, und/oder eine Information, die in einem Teilnehmeridentifikationsmodul gespeichert ist, das in dem Netzwerkgerät (130) integriert ist.

6. Verfahren nach einem der vorhergehenden Ansprüche, wobei das drahtlose Kommunikationsnetz (200) ein zellulares Kommunikationsnetz ist, insbesondere ein auf einem der Standards GSM, UMTS oder LTE basierendes zellulares Kommunikationsnetz.

7. Verfahren nach einem der vorhergehenden Ansprüche, wobei das Senden über das nicht-optische Kommunikationsnetz (200) in den Schritten c) und d) als sichere Datenübertragung erfolgt.

8. Verfahren nach einem der vorhergehenden Ansprüche, wobei Schritt b) das Austauschen von MAC-Adressen zwischen dem optischen Netzwerk-Endgerät (120) und dem Netzwerkgerät (130) umfasst, und wobei das optische Netzwerk-Endgerät (120) dem Netzwerkgerät (130) über DHCP eine IP-Adresse zuordnet und unter Verwendung der zugeordneten IP-Adresse eine IP-basierte Kommunikationsverbindung herstellt.

9. Router (130), umfassend
- eine erste Schnittstelle (135) zum Verbinden mit einem optischen Netzwerk-Endgerät (120) und
- eine zweite Schnittstelle (138) zum Verbinden mit einem nicht-optischen Kommunikationsnetz, insbesondere mit einem drahtlosen Kommunikationsnetz (200), wobei das drahtlose Kommunikationsnetz (200) insbesondere ein zellulares Kommunikationsnetz ist, wobei der Router (130) für einen normalen Betriebsmodus und für einen Lernbetriebsmodus eingerichtet ist, wobei der Router (130) dazu eingerichtet ist, sich in dem normalen Betriebsmodus über ein optisches Netzwerk-Endgerät (120), das mit der ersten Schnittstelle (135) verbunden ist, mit einer Vermittlungsstelle zu verbinden, wenn eine faseroptische Kommunikationsverbindung zwischen dem optischen Netzwerk-Endgerät (120) und einem optischen Leitungs-Endgerät (100) hergestellt ist, und wobei der Router (130) dazu eingerichtet ist, in Reaktion auf den Empfang eines ersten Lebenszeichensignals von dem optischen Netzwerk-Endgerät (120) in den Lernbetriebsmodus umzuschalten, nachdem das optische Netzwerk-Endgerät (120) mit der ersten Schnittstelle (135) verbunden worden ist, und
wobei der Router (130) in dem Lernbetriebsmodus dazu eingerichtet ist, die folgenden Schritte auszuführen:
- Herstellen einer lokalen IP-basierten Kommunikationsverbindung mit dem verbundenen optischen Netzwerk-Endgerät (120),
- Senden einer Anforderung zum Empfangen einer Registrierungskennung, wobei die Registrierungskennung dem verbundenen optischen Netzwerk-Endgerät (120) zugeordnet ist, an einen zentralen Server (150) über die zweite Schnittstelle, und
- Senden einer Registrierungskennung, die von dem zentralen Server (150) über die zweite Schnittstelle als Antwort empfangen wurde, an das verbundene optische Netzwerk-Endgerät (120) über die hergestellte lokale IP-basierte Kommunikationsverbindung, und wobei der Router (130) dazu eingerichtet ist, in Reaktion auf das Empfangen einer Information von dem optischen Netzwerk-Endgerät (120) über die hergestellte lokale IP-basierte Kommunikationsverbindung, von dem Lernbetriebsmodus zurück in den normalen Betriebsmodus umzuschalten, wobei die Information bestätigt, dass eine faseroptische Kommunikationsverbindung zwischen dem optischen Netzwerk-Endgerät (120) und einem optischen Leitungs-Endgerät (100) hergestellt ist.

10. Router (130) nach Anspruch 9, wobei der Router (130) dazu eingerichtet ist, in dem Lernbetriebsmodus eine Anforderung zum Empfangen einer Registrierungskennung an einen zentralen Server (150) zu senden, wobei die Anforderung eine Information umfasst, die den Router (130) und/oder das verbundene optische Netzwerk-Endgerät (120) identifiziert, und/oder eine Information, die in einem Teilnehmeridentifikationsmodul gespeichert ist, das in dem Router (130) integriert ist.

11. Router (130) nach einem der Ansprüche 9 oder 10, wobei der Router (130) dazu eingerichtet ist, mit dem zentralen Server (150) über das nicht-optische Kommunikationsnetz (200) in gesicherter Weise zu kommunizieren.

12. Optisches Netzwerk-Endgerät (120), umfassend
- eine optische Schnittstelle (126) zum Verbinden mit einem optischen Leitungs-Endgerät (100) über einen Lichtwellenleiter (140),
- eine Verbindungsschnittstelle (125) zum Verbinden mit einem Netzwerkgerät (130), wobei das optische Netzwerk-Endgerät (120) dazu eingerichtet ist, die folgenden Schritte auszuführen:
- Herstellen einer lokalen IP-basierten Kommunikationsverbindung mit einem Netzwerkgerät (130), das mit der Verbindungsschnittstelle (125) verbunden ist,
- Empfangen einer Registrierungskennung von dem verbundenen Netzwerkgerät (130) und Speichern der empfangenen Registrierungskennung in einem Speicher (122) des optischen Netzwerk-Endgeräts (120),
- Durchführen eines Registrierungsprozesses mit einem optischen Leitungs-Endgerät (100), der über einen Lichtwellenleiter (140) mit dem optischen Netzwerk-Endgerät (120) verbunden ist, unter Verwendung der gespeicherten Registrierungskennung,
- Herstellen einer faseroptischen Kommunikationsverbindung mit dem optischen Leitungs-Endgerät (100) über den Lichtwellenleiter (140),
- Senden einer Bestätigungsinformation an das verbundene Netzwerkgerät (130) über die IP-basierte Kommunikationsverbindung, wobei die Information bestätigt, dass die faseroptische Kommunikationsverbindung zwischen dem optischen Netzwerk-Endgerät (120) und dem optischen Leitungs-Endgerät (100) erfolgreich hergestellt wurde, und
- Umschalten in einen Überbrückungsmodus, nachdem die Bestätigungsinformationen an das verbundene Netzwerkgerät (130) übertragen wurden.

13. Optisches Netzwerk-Endgerät (120) nach Anspruch 12, das dazu eingerichtet ist, in Reaktion darauf, dass das Netzwerkgerät (130) mit der Verbindungsschnittstelle (125) des optischen Netzwerk-Endgeräts (120) verbunden wird, ein erstes Lebenszeichensignal an das verbundene Netzwerkgerät (130) zu senden.

14. Optisches Netzwerk-Endgerät (120) nach einem der Ansprüche 12 oder 13, das dazu eingerichtet ist, MAC-Adressen mit einem Netzwerkgerät (130) auszutauschen, das mit der Verbindungsschnittstelle (125) verbunden ist, um dem Netzwerkgerät (130) über DHCP eine IP-Adresse zuzuordnen und unter Verwendung der zugeordneten IP-Adresse eine lokale IP-basierte Kommunikationsverbindung mit dem Netzwerkgerät (130) herzustellen.

## Revendications

1. Procédé pour configurer un terminal de réseau optique (120), comprenant les étapes consistant à :
a) connecter le terminal de réseau optique (120) à un dispositif de mise en réseau (130),
b) établir une connexion de communication locale basée sur IP entre le terminal de réseau optique (120) et le dispositif de mise en réseau (130),
c) transmettre une demande de réception d'un identifiant d'enregistrement du dispositif de mise en réseau (130) à un serveur central (150), ledit identifiant d'enregistrement étant associé au terminal de réseau optique (120), la demande étant transmise via un réseau de communication non optique, en particulier un réseau de communication sans fil (200),
d) transmettre un identifiant d'enregistrement, qui est associé au terminal de réseau optique (120), du serveur central (150) au dispositif de mise en réseau (130) via le réseau de communication non optique (200), et transmettre l'identifiant d'enregistrement reçu du dispositif de mise en réseau (130) au terminal de réseau optique (120) connecté via la connexion de communication basée sur IP, et
e) stocker l'identifiant d'enregistrement reçu dans le terminal de réseau optique (120).

2. Procédé selon la revendication 1, le procédé comprenant en outre les étapes suivantes :
f) réaliser un processus d'enregistrement par le terminal de réseau optique (120) avec un terminal de ligne optique (100), qui est connecté au terminal de réseau optique (120) via une fibre optique (140), en utilisant l'identifiant d'enregistrement stocké à l'étape e),
g) établir une connexion de communication par fibre optique entre le terminal de réseau optique (120) et le terminal de ligne optique (100) via la fibre optique (140),
h) transmettre une information du terminal de réseau optique (120) au dispositif de mise en réseau (130) via la connexion de communication basée sur IP, ladite information confirmant que l'étape g) a été réalisée avec succès, et
i) passer dans un mode pontage par le terminal de réseau optique (120).

3. Procédé selon la revendication 2, dans lequel, après que le terminal de réseau optique (120) a été connecté au dispositif de mise en réseau (130) à l'étape a), le terminal de réseau optique (120) transmet un premier signal de signe de vie au dispositif de mise en réseau (130), en réponse auquel le dispositif de mise en réseau (130) passe à un mode de fonctionnement d'apprentissage, et dans lequel le dispositif de mise en réseau (130) passe du mode de fonctionnement d'apprentissage à un mode de fonctionnement normal en réponse à réception des informations transmises à l'étape h).

4. Procédé selon l'une quelconque des revendications 2 ou 3, dans lequel le dispositif de mise en réseau (130) est prévu comme un routeur qui, dans le mode de fonctionnement normal, est adapté pour se connecter à un bureau central via la connexion de communication par fibre optique établie.

5. Procédé selon l'une quelconque des revendications précédentes, dans lequel la demande transmise du dispositif de mise en réseau (130) au serveur central (150) à l'étape c) comprend une information qui identifie le dispositif de mise en réseau (130) et/ou le terminal de réseau optique (120) et/ou une information stockée sur un module d'identification d'abonné qui est installé dans le dispositif de mise en réseau (130).

6. Procédé selon l'une quelconque des revendications précédentes, dans lequel le réseau de communication sans fil (200) est un réseau de communication cellulaire, en particulier un réseau de communication cellulaire basé sur l'une des normes GSM, UMTS ou LTE.

7. Procédé selon l'une quelconque des revendications précédentes, dans lequel les transmissions via le réseau de communication non optique (200) aux étapes c) et d) sont réalisées sous forme de transmissions de données sécurisées.

8. Procédé selon l'une quelconque des revendications précédentes, dans lequel l'étape b) comprend l'échange d'adresses MAC entre le terminal de réseau optique (120) et le dispositif de mise en réseau (130), et l'attribution, par le terminal de réseau optique (120), d'une adresse IP au dispositif de mise en réseau (130) via DHCP et l'établissement d'une connexion de communication basée sur IP en utilisant ladite adresse IP attribuée.

9. Routeur (130), comprenant
- une première interface (135) pour la connexion à un terminal de réseau optique (120), et
- une deuxième interface (138) pour la connexion à un réseau de communication non optique, en particulier à un réseau de communication sans fil (200), le réseau de communication sans fil (200) en particulier étant un réseau de communication cellulaire,
le routeur (130) étant adapté pour un mode de fonctionnement normal et pour un mode de fonctionnement d'apprentissage, où, dans le mode de fonctionnement normal, le routeur (130) est adapté pour se connecter à un bureau central via un terminal de réseau optique (120) qui est connecté à la première interface (135), si une connexion de communication par fibre optique est établie entre le terminal de réseau optique (120) et un terminal de ligne optique (100), et le routeur (130) étant adapté pour passer en mode de fonctionnement d'apprentissage en réponse à la réception d'un premier signal de signe de vie à partir du terminal de réseau optique (120), après que ledit terminal de réseau optique (120) a été connecté à la première interface (135), et
où, dans le mode de fonctionnement d'apprentissage, le routeur (130) est adapté pour réaliser les étapes suivantes :
- établir une connexion de communication locale basée sur IP avec le terminal de réseau optique (120) connecté,
- transmettre une demande de réception d'un identifiant d'enregistrement à un serveur central (150) via la deuxième interface, ledit identifiant d'enregistrement étant associé au terminal de réseau optique (120) connecté, et
- transmettre un identifiant d'enregistrement, qui a été reçu en réponse à partir du serveur central (150) via la deuxième interface, au terminal de réseau optique (120) connecté via la connexion de communication locale basée sur IP établie, et
le routeur (130) étant adapté pour repasser du mode de fonctionnement d'apprentissage au mode de fonctionnement normal en réponse à la réception d'une information du terminal de réseau optique (120) via la connexion de communication locale basée sur IP établie, ladite information confirmant qu'une connexion de communication par fibre optique est établie entre le terminal de réseau optique (120) et un terminal de ligne optique (100).

10. Routeur (130) selon la revendication 9, le routeur (130) étant adapté pour transmettre, dans le mode de fonctionnement d'apprentissage, une demande de réception d'un identifiant d'enregistrement à un serveur central (150), où ladite demande comprend une information qui identifie le routeur (130) et/ou le terminal de réseau optique (120) connecté et/ou une information stockée dans un module d'identification d'abonné qui est installé dans le routeur (130).

11. Routeur (130) selon l'une quelconque des revendications 9 ou 10, le routeur (130) étant adapté pour communiquer de manière sécurisée avec le serveur central (150) via le réseau de communication non optique (200).

12. Terminal de réseau optique (120), comprenant
- une interface optique (126) pour la connexion à un terminal de ligne optique (100) via une fibre optique (140) ,
- une interface de liaison (125) pour la connexion à un dispositif de mise en réseau (130), où
le terminal de réseau optique (120) est adapté pour réaliser les étapes suivantes :
- établir une connexion de communication locale basée sur IP avec un dispositif de mise en réseau (130) qui est connecté à l'interface de liaison (125),
- recevoir un identifiant d'enregistrement à partir du dispositif de mise en réseau (130) connecté, et stocker l'identifiant d'enregistrement reçu dans une mémoire (122) du terminal de réseau optique (120),
- réaliser un processus d'enregistrement avec un terminal de ligne optique (100), qui est connecté au terminal de réseau optique (120) via une fibre optique (140), en utilisant l'identifiant d'enregistrement stocké,
- établir une connexion de communication par fibre optique avec le terminal de ligne optique (100) via la fibre optique (140),
- transmettre une information de confirmation au dispositif de mise en réseau (130) connecté via la connexion de communication basée sur IP, ladite information confirmant que la connexion de communication par fibre optique entre le terminal de réseau optique (120) et le terminal de ligne optique (100) a été établie avec succès, et
- passer dans un mode pontage après que ladite information de confirmation a été transmise au dispositif de mise en réseau (130) connecté.

13. Terminal de réseau optique (120) selon la revendication 12, adapté pour transmettre un premier signal de signe de vie au dispositif de mise en réseau (130) connecté, en réponse au fait que le dispositif de mise en réseau (130) soit connecté à l'interface de liaison (125) du terminal de réseau optique (120).

14. Terminal de réseau optique (120) selon l'une quelconque des revendications 12 ou 13, adapté pour échanger des adresses MAC avec un dispositif de mise en réseau (130) connecté à l'interface de liaison (125), pour attribuer via DHCP une adresse IP audit dispositif de mise en réseau (130) et pour établir une connexion de communication locale basée sur IP avec ledit dispositif de mise en réseau (130) en utilisant ladite adresse IP attribuée.
